# EUROPÄISCHE PATENTSCHRIFT

(11) **EP 2 603 347 B1**
(45) Veröffentlichungstag und Bekanntmachung des Hinweises auf die Patenterteilung: **09.10.2019**
(21) Anmeldenummer: 11785293.9
(22) Anmeldetag: 09.08.2011
(51) Int. Cl.: B23K 20/12, F02F 3/00

(54) **KOLBEN FÜR EINEN VERBRENNUNGSMOTOR UND VERFAHREN ZU SEINER HERSTELLUNG**
PISTON FOR AN INTERNAL COMBUSTION ENGINE AND METHOD FOR PRODUCING SAME
PISTON POUR UN MOTEUR À COMBUSTION INTERNE ET PROCÉDÉ DE FABRICATION CORRESPONDANT

(30) Priorität: 05.05.2011 DE 102011100521; 10.08.2010 DE 102010033878
(43) Veröffentlichungstag der Anmeldung: 19.06.2013
(73) Patentinhaber: Mahle International GmbH, 70376 Stuttgart (DE)
(72) Erfinder: SCHARP, Rainer, 71665 Vaihingen (DE); SEIFRIED, Matthias, 78662 Bösingen (DE)
(74) Vertreter: BRP Renaud & Partner mbB Rechtsanwälte Patentanwälte Steuerberater
(86) Internationale Anmeldenummer: PCT/DE2011/001566
(87) Internationale Veröffentlichungsnummer: WO 2012/019595

(56) Entgegenhaltungen:
- DE-A1- 10 128 737
- JP-A- H 062 613
- JP-A- 2003 025 076
- US-A- 3 235 158
- US-A- 3 596 571
- US-A- 6 155 157
- US-A1- 2009 220 820
- "Friction Welding" In: "Welding Handbook, Seventh Edition, Volume 3", 12 December 1980 (1980-12-12), American Welding Society, Florida, XP055202305, ISBN: 978-0-87-171188-5

## Beschreibung

Die vorliegende Erfindung betrifft ein Verfahren zur Herstellung eines Kolbens für einen Verbrennungsmotor mit einem Kolbengrundkörper und einem Kolbenringelement, wobei der Kolbengrundkörper zumindest einen Kolbenschaft aufweist, wobei das Kolbenringelement zumindest einen Kolbenboden, einen umlaufenden Feuersteg und eine mit Ringnuten versehene umlaufende Ringpartie aufweist und wobei der Kolbengrundkörper und das Kolbenringelement einen umlaufenden geschlossenen Kühlkanal bilden. Der Oberbegriff von Anspruch 1 basiert auf US2009220820 A1.

Reibgeschweißte Kolben mit nach unten offenen, mittels eines Abdeckblechs verschließbaren Kühlkanälen im Kolbenkopf sind bspw. aus der DE 10 2004 019 012 A1 und aus der WO 2007/128265 A1 bekannt. Hierbei weisen Kolbengrundkörper und Kolbenringpartie jeweils nur eine Fügefläche auf. In der WO 2007/128265 A1 wird vorgeschlagen, dass die Fügeflächen vor dem Reibschweißen nicht vollflächig in Kontakt stehen, um die Größe des nach dem Reibschweißen unterhalb des Kühlkanals vorhandenen Reibschweißwulsts kontrolliert zu verringern, so dass er im Anschluss an das Reibschweißen leichter zu entfernen ist. Die DE 10 2004 019 012 A1 offenbart einen Kolbengrundkörper und ein Kolbenringelement, deren Fügeflächen einen Hohlraum bilden, um während des Reibschweißens überschüssigen Werkstoff aufzunehmen.

Beide Verfahren sind jedoch nicht geeignet, um Kolben mit geschlossenem umlaufendem Kühlkanal herzustellen, da das beim Reibschweißen gebildete typische Paar eingerollter Reibschweißwulste radial in den Kühlkanal ragt. Diese umlaufenden Reibschweißwulste beanspruchen im Kühlkanal sehr viel Platz. Somit wird das Volumen des Kühlkanals übermäßig verringert und die Strömung des Kühlöls im Kühlkanal behindert. Bei Kolben mit einer vergleichsweise großen Brennraummulde kann der Kühlkanal in radialer Richtung so schmal ausgebildet sein, dass er die Reibschweißwulste gar nicht aufnehmen könnte.

Die Aufgabe der vorliegenden Erfindung besteht darin, ein Reibschweißverfahren zur Herstellung eines Kolbens mit geschlossenem Kühlkanal derart weiterzubilden, dass der Kühlkanal des fertigen Kolbens keine übermäßige Volumenverringerung erfährt.

Die Lösung besteht in einem Verfahren gemäß Anspruch 1.

Der erfindungsgemäße Kolben zeichnet sich dadurch aus, dass Kolbengrundkörper und Kolbenringelement durch Reibschweißen miteinander verbunden sind und der Kühlkanal weitgehend frei von Reibschweißwulsten ist.

In Werkstofffestigkeitsuntersuchungen hat sich gezeigt, dass bei eingerollten Wulsten hohe Kerbspannungsüberhöhungen auftreten, die auf die scharfen Kerben am Austritt der eingerollten Wulste zurückzuführen sind. Bei dem oben aufgeführten neu entwickelten Verfahren, werden diese scharfen Kerben vermieden. Dadurch ergibt sich eine deutliche Festigkeitserhöhung die sich zwischen 85 und 100% der Grundwerkstofffestigkeit bewegt und dadurch eine größere Freiheit beim Auslegen der einzelnen Konstruktionen möglich macht.

Die erfindungsgemäße Idee besteht darin, die Fügeflächen so auszubilden, dass der kühlraumseitige Bereich der Fügeflächen während des Reibschweißens überschüssigen Werkstoff aufnehmen kann. Dadurch bleibt die radiale Ausdehnung des Kühlkanals während des Reibschweißens im Bereich der Reibschweißnaht praktisch unverändert erhalten. Mit dem erfindungsgemäßen Verfahren ist es möglich, mehrteilige Kolben mit funktionsfähigem, geschlossenem umlaufendem Kühlkanal mittels Reibschweißverfahren herzustellen.

Die vorliegende Erfindung ist für alle anspruchsgemäßen Kolbenbauvarianten geeignet. Das Kolbenringelement bzw. sein Rohling kann insbesondere eine Brennraummulde aufweisen. Das Kolbenringelement bzw. sein Rohling kann stattdessen auch zumindest einen Wandbereich einer Brennraummulde aufweisen. Dann weist der Kolbengrundkörper bzw. sein Rohling zumindest einen Bodenbereich einer Brennraummulde auf, so dass beide Bauteile gemeinsam die komplette Brennraummulde bilden.

Eine bevorzugte Ausführungsform besteht darin, dass in Schritt (d) der Rohling des Kolbengrundkörpers oder der Rohling des Kolbenringelements in Rotation versetzt wird, der Rohling des Kolbengrundkörpers und der Rohling des Kolbenringelements bei einer Drehzahl von 1.500 U/min bis 2.500 U/min unter einem Anpressdruck, bezogen auf die Fügeflächen, von 10 N/mm² bis 30 N/mm² zusammengedrückt werden, die Rotation nach 1 Sekunde bis 3 Sekunde unter Beibehaltung des Anpressdrucks beendet wird und anschließend der Rohling des Kolbengrundkörpers und der Rohling des Kolbenringelements unter einem Fügedruck, bezogen auf die Fügeflächen, von 100 N/mm² bis 140 N/mm² zusammengepresst werden. Diese Verfahrensparameter begünstigen das Vermeiden typischer Reibschweißwulste, so dass das Ausformen der umlaufenden Aufweitung aufgrund der unter diesen Umständen kleineren Abmessungen einen besonders geringen Arbeitsaufwand erfordert.

Die vorgesehenen Aufweitungen können auf unterschiedliche Weise hergestellt werden. Insbesondere können in Schritt (c) Aufweitungen an der inneren und äußeren Fügefläche des Rohlings des Kolbengrundkörpers und/oder an der inneren und äußeren Fügefläche des Rohlings des Kolbenringelements angebracht werden. Ferner kann die eine umlaufende Aufweitung beliebig ausgeformt sein, bspw. in Form einer Schrägfläche, einer Fase oder einer Mulde. Die Aufweitungen können bspw. mit einer axialen Erstreckung von 1,0 mm bis 1,5 mm und/oder mit einer radialen Erstreckung von mindestens 0,5 mm ausgeformt sein. Ausführungsbeispiele der vorliegenden Erfindung werden im Folgenden anhand der beigefügten Zeichnungen näher erläutert. Es zeigen in einer schematischen, nicht maßstabsgetreuen Darstellung:
- Fig. 1: ein Ausführungsbeispiel eines Rohlings eines Kolbengrundkörpers und eines Rohlings eines Kolbenringelements zur Herstellung des Kolbens im Schnitt;
- Fig. 2: eine vergrößerte Detaildarstellung des Fügeflächenbereichs gemäß Figur 1;
- Fig. 3a: der aus den Bauteilen gemäß Figur 1 hergestellte Kolbenrohling für einen erfindungsgemäßen Kolben im Schnitt;
- Fig. 3b: eine vergrößerte Detaildarstellung des Fügebereichs gemäß Figur 3a;
- Fig. 4a: der aus dem Kolbenrohling gemäß Figur 3a hergestellte Kolben;
- Fig. 4b: eine vergrößerte Detaildarstellung des Fügebereichs des Kolbens gemäß Figur 4a;
- Fig. 5: ein weiteres Ausführungsbeispiel eines Rohlings eines Kolbengrundkörpers und eines Rohlings eines Kolbenringelements zur Herstellung des Kolbens im Schnitt;
- Fig. 6: ein weiteres Ausführungsbeispiel eines Rohlings eines Kolbengrundkörpers und eines Rohlings eines Kolbenringelements zur Herstellung des Kolbens im Schnitt;
- Fig. 7a: der aus den Bauteilen gemäß Figur 5 bzw. Figur 6 hergestellte Kolbenrohling für den Kolben im Schnitt;
- Fig. 7b: eine vergrößerte Detaildarstellung des Fügebereichs des Kolbens gemäß Figur 7a;

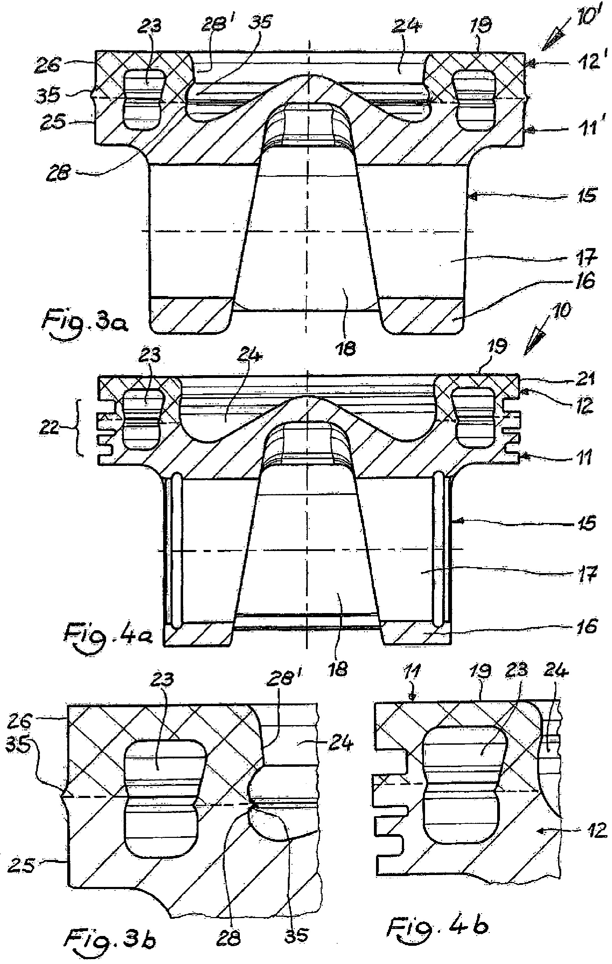

Die Figuren 4a und 4b zeigen den Kolben 10. Der Kolben 10 besteht aus einem Kolbengrundkörper 11 und einem Kolbenringelement 12. Beide Bauteile können aus jedem metallischen Werkstoff bestehen, bspw. gemäß DIN EN 10083 oder DIN EN 10267 bestehen, der einer Vergütung unterworfen werden kann und zum Reibschweißen geeignet ist.

Im Ausführungsbeispiel besteht der Kolbengrundkörper aus einem Stahlwerkstoff, bspw. AfP-Stahl. Der Kolbengrundkörper 11 weist einen Kolbenschaft 15 auf, der in an sich bekannter Weise mit Naben 16 und Nabenbohrungen 17 zur Aufnahme eines Kolbenbolzens (nicht dargestellt) sowie Schaftbereichen 18 mit Laufflächen (nicht dargestellt) versehen ist. Das Kolbenringelement 12 ist im Ausführungsbeispiel ebenfalls aus einem Stahlwerkstoff, bspw. 42CrMo4, hergestellt. Das Kolbenringelement 12 weist einen Kolbenboden 19 sowie einen umlaufenden Feuersteg 21 auf. Der Kolbengrundkörper 11 und das Kolbenringelement 12 bilden eine umlaufende Ringpartie 22 zur Aufnahme von Kolbenringen (nicht dargestellt), einen umlaufenden geschlossenen Kühlkanal 23 sowie eine Brennraummulde 24.

Der Kolbengrundkörper 11 und das Kolbenringelement 12 sind durch Reibschweißen miteinander verbunden. Insbesondere aus Figur 4b geht hervor, dass der umlaufende geschlossene Kühlkanal 23 dennoch keine typischen Reibschweißwulste aufweist. Für die Kühlung des erfindungsgemäßen Kolbens 10 im Motorbetrieb steht somit das gesamte ursprünglich vorgesehene Volumen des Kühlkanals 23 zur Verfügung. Ferner wird die Strömung des Kühlöls im Kühlkanal nicht beeinträchtigt.

Der Kolben 10 wird auf die nachfolgend beschriebene Weise herstellt.

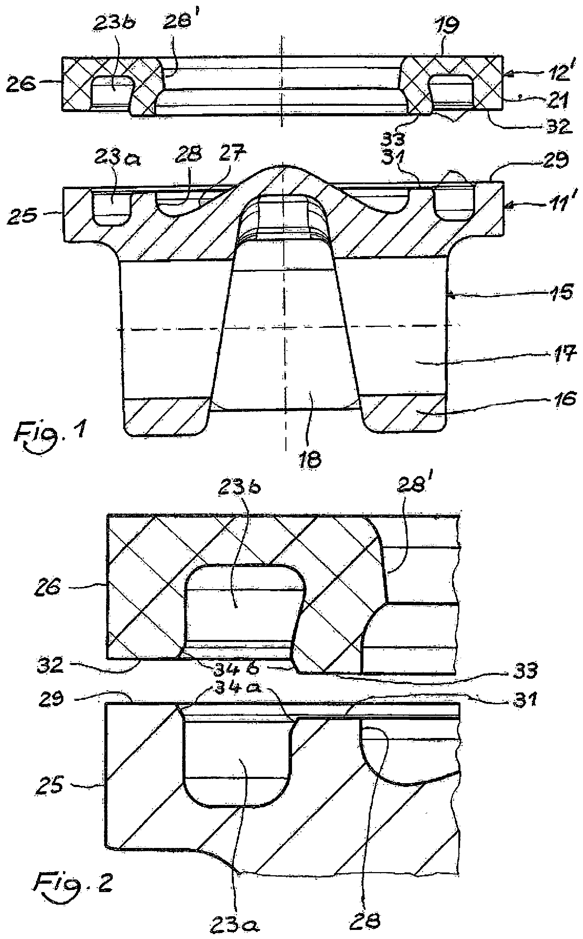

Gemäß den Figuren 1 und 2 wird zunächst ein vorbearbeiteter Rohling 11' eines Kolbengrundkörpers 11 sowie ein vorbearbeiteter Rohling 12' eines Kolbenringelements 12 bereitgestellt. Die Rohlinge 11', 12' entsprechen im Wesentlichen dem fertigen Kolbengrundkörper 11 bzw. dem fertigen Kolbenringelement 12, so dass gleiche Strukturen mit denselben Bezugszeichen versehen sind und diesbezüglich auf die obige Beschreibung zu Figur 4a verwiesen wird. Der wesentliche Unterschied besteht darin, dass keine Ringpartie ausgearbeitet ist, sondern eine glatte Mantelfläche 25, am Rohling 11' des Kolbengrundkörpers 11 sowie eine glatte Mantelfläche 26 am Rohling 12' des Kolbenringelements 12 vorgesehen ist.

Die Rohlinge 11', 12' können je nach Wahl des Werkstoffs, gegossen, geschmiedet oder pulvermetallurgisch gesintert sein. In den Rohling 11' des Kolbengrundkörpers 11 ist im Ausführungsbeispiel der Bodenbereich 27 ein Teil 28 des Wandbereichs der Brennraummulde 24 vorbearbeitet, bspw. eingedreht. Ferner ist ein umlaufender unterer Kühlkanalteil 23a des Kühlkanals 23 vorbearbeitet. Daraus ergeben sich eine äußere Fügefläche 29 und eine innere Fügefläche 31. In den Rohling 12' des Kolbenringelements 12 ist im Ausführungsbeispiel der verbleibende Teil 28' des Wandbereichs der Brennraummulde eingearbeitet, bspw. eingedreht. Ferner ist ein umlaufender oberer Kühlkanalteil 23b des Kühlkanals 23 eingearbeitet. Daraus ergeben sich eine äußere Fügefläche 32 und eine innere Fügefläche 33. Die äußere Fügefläche 29 des Rohlings 11' korrespondiert mit der äußere Fügefläche 32 des Rohlings 12'. In entsprechender Weise korrespondiert die innere Fügefläche 31 des Rohlings 11' mit der inneren Fügefläche 33 des Rohlings 12'. Das bedeutet, dass die beiden Rohlinge 11', 12' entlang ihrer Fügeflächen 29, 31 bzw. 32, 33 miteinander zu einem Kolbenrohling 10' verbunden werden können.

Im Ausführungsbeispiel sind an beiden Fügeflächen 29, 31 des Rohlings 11' sowie an beiden Fügeflächen 32, 33 des Rohlings 12' jeweils eine umlaufende Aufweitung 34a, 34b in Form einer Fase ausgeformt. Die Aufweitungen 34a, 34b erstrecken sich in Richtung des Kühlkanalteils 23a des Rohlings 11'. In entsprechender Weise erstrecken sich die Aufweitungen 34b in Richtung des Kühlkanalteils 23b des Rohlings 12'. Die maximale axiale Erstreckung der Aufweitungen 34a, 34b beträgt im Ausführungsbeispiel jeweils etwa 1,0 mm, während die radiale Erstreckung der Aufweitungen 34a, 34b jeweils etwa 0,5 mm beträgt. Wenn die Fügeflächen 29, 31 bzw. 32, 33 der Rohlinge 11', 12' zu Beginn des Reibschweißvorgangs (siehe unten) miteinander in Kontakt kommen, bilden die Aufweitungen 34a, 34b im Ausführungsbeispiel zwei einander gegenüberliegende Fugen mit einer maximalen axialen Erstreckung von etwa 2 mm, die überschüssigen Werkstoff aufnehmen können. Selbstverständlich können auch Aufweitungen mit unterschiedlicher Geometrie miteinander kombiniert werden.

Zum Verbinden der beiden Rohlinge 11', 12' werden diese in an sich bekannter Weise fluchtend gespannt. Dann wird einer der beiden Rohlinge 11', 12' in Rotation versetzt, bis eine Drehzahl von 1.500 U/min bis 2.500 U/min erreicht ist. Nun werden die Rohlinge 11', 12' über ihre Fügeflächen 29, 31 bzw. 32, 33 miteinander in Kontakt gebracht und unter einem konstanten anfänglichen Anpressdruck, bezogen auf die Fügeflächen 29, 31 bzw. 32, 33, von 10 N/mm² bis 30 N/mm² zusammengedrückt. Die Rotationsbewegung und der konstante Anpressdruck erzeugen eine Reibung, welche die Fügeflächen 29, 31 bzw. 32, 33 aufheizt. Die Drehzahl und der Anpressdruck werden abhängig von den verwendeten Werkstoffen so gewählt, dass sich die Fügeflächen 29, 31 bzw. 32, 33 auf eine Temperatur nahe dem Schmelzpunkt des Werkstoffs bzw. der Werkstoffe erwärmen. Wenn dies erreicht ist (je nach Werkstoff bzw. Werkstoffen nach 1 bis 3 Sekunden), wird die Rotation unter Beibehaltung des anfänglichen Anpressdrucks beendet, d.h. die zur Drehung verwendete Spindel wird so schnell wie möglich (möglichst innerhalb weniger als 1 Sekunde) abgebremst und angehalten. Während dieses Vorgangs wird der Anpressdruck beibehalten. Nach dem Anhalten wird der Anpressdruck auf einen Fügedruck, bezogen auf die Fügeflächen 29, 31 bzw. 32, 33 auf ein Mehrfaches des anfänglichen Anpressdrucks von 100 N/mm² bis 140 N/mm² erhöht, und die Rohlinge 11', 12' werden etwa 5 Sekunden unter diesem Fügedruck zusammengepresst. Hierbei wird der überschüssige Werkstoff in den oben beschriebenen Fugen aufgenommen.

Die Figuren 3a und 3b zeigen den so gefertigten Kolbenrohling 10'. Der Kolbenrohling 10' entspricht im Wesentlichen dem fertigen Kolben 10, so dass gleiche Strukturen mit denselben Bezugszeichen versehen sind und diesbezüglich auf die obige Beschreibung zu Figur 4a verwiesen wird. Der Kolbenrohling 10' weist als Ergebnis des oben beschriebenen Reibschweißvorgangs entlang der Reibschweißnähte sowohl an den Mantelflächen 25, 26 der Rohlinge 11' bzw. 12' sowie am Wandbereich 28, 28' je keine typische Reibschweißwulst 35 auf. Insbesondere der Figur 3b ist zu entnehmen, dass der aus den Kühlkanalteilen 23a, 23b der Rohlinge 11' bzw. 12' gebildete Kühlkanal 23 entlang der Reibschweißnähte keine typischen eingerollten Reibschweißwulste aufweist. Der beim oben beschriebenen Reibschweißvorgang freigesetzte aufgeschmolzene überschüssige Werkstoff, der im Stand der Technik eingerollte Reibschweißwulste bilden würde, wurde während des Reibschweißvorgangs von den aus den Aufweitungen 34a, 34b gebildeten Fugen aufgenommen.

Der Kolbenrohling 10' wird in an sich bekannter Weise, abhängig von der Ausbildung der Rohlinge 11', 12', nachgearbeitet bzw. fertigbearbeitet. Bspw. können Außenform, Oberflächen, Brennraummulde, Nabenbohrungen, etc. fertig bearbeitet werden. Insbesondere werden die Ringpartie 22 eingearbeitet, und die Reibschweißwulste 35 werden entfernt. Im Ergebnis erhält man den oben beschriebenen fertigen Kolben gemäß den Figuren 4a und 4b.

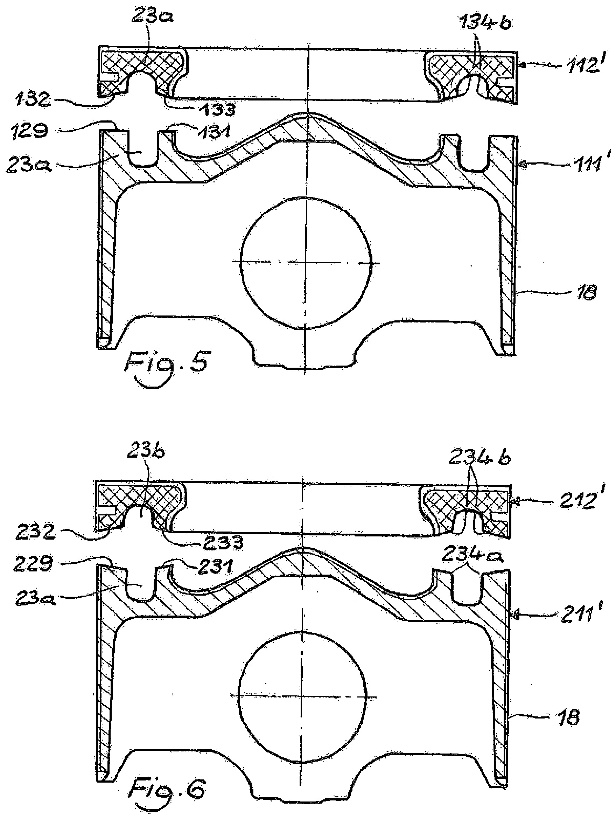

Figur 5 zeigt ein weiteres Ausführungsbeispiel eines Rohlings 111' eines Kolbengrundkörpers 11 sowie eines Rohlings 112' eines Kolbenringelements 12 für einen erfindungsgemäßen Kolben 10. Die Rohlinge 111', 112' entsprechen im Wesentlichen den Rohlingen 11', 12' gemäß Figur 1, so dass gleiche Strukturen mit denselben Bezugszeichen versehen sind und diesbezüglich auf die obige Beschreibung zu Figur 1 verwiesen wird. Es wird darauf hingewiesen, dass die Darstellung gemäß Figur 5 gegenüber der Darstellung gemäß Figur 1 um 90° gedreht ist.

Analog zu den Rohlingen 11', 12' gemäß Figur 1 weist der Rohling 111' eine äußere Fügefläche 129 und der Rohling 112' eine hiermit korrespondierende äußere Fügefläche 132 auf. Ebenfalls analog zu den Rohlingen 11', 12' gemäß Figur 1 weist der Rohling 111' eine innere Fügefläche 131 und der Rohling 112' eine hiermit korrespondierende innere Fügefläche 133 auf. Das bedeutet, dass die beiden Rohlinge 111', 112' entlang ihrer Fügeflächen 129, 131 bzw. 132, 133 miteinander zu einem Kolbenrohling 110' verbunden werden können.

Im Ausführungsbeispiel ist an beiden Fügeflächen 132, 133 des Rohlings 112' des Kolbenringelements 12 jeweils eine umlaufende Aufweitung 134b in Form einer Schräge ausgeformt. Die Aufweitungen 134b erstrecken sich in Richtung des Kühlkanalteils 23b des Rohlings 112'. Die maximale axiale Erstreckung der Aufweitungen 134b beträgt im Ausführungsbeispiel jeweils etwa 1 mm. Wenn die Fügeflächen 129, 131 bzw. 132, 133 der Rohlinge 111', 112' zu Beginn des oben beschriebenen Reibschweißvorgangs miteinander in Kontakt kommen, bilden die Aufweitungen 134b im Ausführungsbeispiel einen Freiraum in Form eines rechtwinkligen Dreiecks mit einer maximalen axialen Erstreckung von etwa 1 mm, in dem sich der aufgeschmolzene Werkstoff verteilt. Selbstverständlich können auch Aufweitungen mit unterschiedlicher Geometrie miteinander kombiniert werden.

Figur 6 zeigt ein weiteres Ausführungsbeispiel eines Rohlings 211' eines Kolbengrundkörpers 11 sowie eines Rohlings 212' eines Kolbenringelements 12 für einen erfindungsgemäßen Kolben 10. Die Rohlinge 211', 212' entsprechen im Wesentlichen den Rohlingen 11', 12' gemäß Figur 1, so dass gleiche Strukturen mit denselben Bezugszeichen versehen sind und diesbezüglich auf die obige Beschreibung zu Figur 1 verwiesen wird. Es wird darauf hingewiesen, dass die Darstellung gemäß Figur 6 gegenüber der Darstellung gemäß Figur 1 um 90° gedreht ist.

Analog zu den Rohlingen 11', 12' gemäß Figur 1 weist der Rohling 211' eine äußere Fügefläche 229 und der Rohling 212' eine hiermit korrespondierende äußere Fügefläche 232 auf. Ebenfalls analog zu den Rohlingen 11', 12' gemäß Figur 1 weist der Rohling 211' eine innere Fügefläche 231 und der Rohling 212' eine hiermit korrespondierende innere Fügefläche 233 auf. Das bedeutet, dass die beiden Rohlinge 211', 212' entlang ihrer Fügeflächen 229, 231 bzw. 232, 233 miteinander zu einem Kolbenrohling 110' verbunden werden können.

Im Ausführungsbeispiel sind an beiden Fügeflächen 229, 231 des Rohlings 211' sowie an beiden Fügeflächen 232, 233 des Rohlings 212' jeweils eine umlaufende Aufweitung 234a, 234b in Form einer Schräge ausgeformt. Die Aufweitungen 234a erstrecken sich in Richtung des Kühlkanalteils 23a des Rohlings 211'. In entsprechender Weise erstrecken sich die Aufweitungen 234b in Richtung des Kühlkanalteils 23b des Rohlings 212'. Die maximale axiale Erstreckung der Aufweitungen 234a, 234b beträgt im Ausführungsbeispiel jeweils etwa 1 mm. Wenn die Fügeflächen 229, 231 bzw. 232, 233 der Rohlinge 211', 212' zu Beginn des oben beschriebenen Reibschweißvorgangs miteinander in Kontakt kommen, bilden die Aufweitungen 234a, 234b im Ausführungsbeispiel zwei einander gegenüberliegende Freiräume in Form eines gleichschenkligen Dreiecks mit einer maximalen axialen Erstreckung von etwa 2 mm, in dem sich der aufgeschmolzene Werkstoff verteilt. Selbstverständlich können auch Aufweitungen mit unterschiedlicher Geometrie miteinander kombiniert werden.

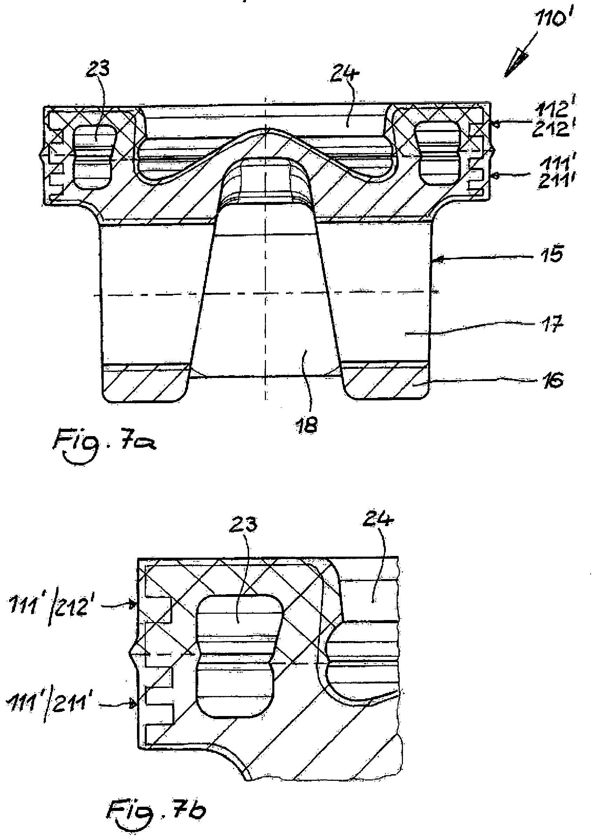

Mit dem oben beschriebenen Reibschweißverfahren wird aus den Rohlingen 111', 112' gemäß Figur 5 und aus den Rohlingen 211', 212' gemäß Figur 6 im Wesentlichen der gleiche Kolbenrohling 110' erhalten, wie er in den Figuren 7a und 7b dargestellt ist. Der Kolbenrohling 110' entspricht im Wesentlichen dem Kolbenrohling 10' gemäß den Figuren 3a und 3b, so dass gleiche Strukturen mit denselben Bezugszeichen versehen sind und diesbezüglich auf die obige Beschreibung zu Figur 3a verwiesen wird. Der Kolbenrohling 110' weist als Ergebnis des oben beschriebenen Reibschweißvorgangs die in Fig. 7b wiedergegeben Reibschweißwulste bzw. Verdickungen auf. Auch in dem aus den Kühlkanalteilen 23a, 23b der Rohlinge 111' bzw. 112' sowie der Rohlinge 211' bzw. 212' gebildete Kühlkanal 23 enthält Reibschweißwulste bzw. Verdickungen, wie vorgenannt. Der beim oben beschriebenen Reibschweißvorgang freigesetzte aufgeschmolzene überschüssige Werkstoff, der im Stand der Technik Reibschweißwulste bilden würde, wurde während des Reibschweißvorgangs von den aus den Aufweitungen 134b bzw. 234a, 234b gebildeten Freiräumen aufgenommen, so dass sich eine Verteilung des aufgeschmolzenen Materials ergibt, die dafür sorgt, dass die Reibschweißwulste bzw. Verdickungen, welche zum Kühlraum hin gebildet werden, kleiner sind, als die Reibschweißwulste bzw. Verdickungen, welche sich auf der Kühlraum abgewandten Seite befinden.

Der Kolbenrohling 110' wird in an sich bekannter Weise, abhängig von der Ausbildung der Rohlinge 111' 112' bzw. der Rohlinge 221', 212', nachgearbeitet bzw. fertigbearbeitet. Bspw. können Außenform, Oberflächen, Brennraummulde, Nabenbohrungen, etc. fertig bearbeitet werden. Insbesondere wird die Ringpartie 22 eingearbeitet. Im Ergebnis erhält man den gleichen fertigen Kolben 10, wie er oben in Verbindung mit den Figuren 4a und 4b beschrieben wurde.

## Patentansprüche

1. Verfahren zur Herstellung eines Kolbens (10) für einen Verbrennungsmotor mit einem Kolbengrundkörper (11) und einem Kolbenringelement (12), wobei der Kolbengrundkörper (11) zumindest einen Kolbenschaft (15) aufweist, wobei das Kolbenringelement (12) zumindest einen Kolbenboden (19), einen umlaufenden Feuersteg (21) und eine mit Ringnuten versehene umlaufende Ringpartie (22) aufweist und wobei der Kolbengrundkörper (11) und das Kolbenringelement (12) einen umlaufenden geschlossenen Kühlkanal (23) bilden, **gekennzeichnet durch** folgende Verfahrensschritte:
(a) Bereitstellen eines Rohlings (11', 111', 211') eines Kolbengrundkörpers (11), bei dem eine äußere Fügefläche (29, 129, 229) und eine innere Fügefläche (31, 131, 231) sowie ein zwischen beiden Fügeflächen (29, 31; 129, 131; 229, 231) umlaufender unterer Kühlkanalteil (23a) vorbearbeitet sind,
(b) Bereitstellen eines Rohlings (12', 112', 212') eines Kolbenringelements (12), bei dem eine äußere Fügefläche (32, 132, 232) und eine innere Fügefläche (33, 133, 233) sowie ein zwischen beiden Fügeflächen (32, 33; 132, 133; 232, 233) umlaufender oberer Kühlkanalteil (23b) vorbearbeitet sind,
(c) Ausformen einer umlaufenden Aufweitung (34a, 34b; 134b; 234a, 234b) an mindestens einer Fügefläche (29, 129, 229, 31, 131, 231; 32, 132, 232, 33, 133, 233), wobei die Aufweitung (34a, 34b; 134b; 234a, 234b) sich zum zugeordneten Kühlkanalteil (23a; 23b) hin erstreckt,
(d) Verbinden des Rohlings (11', 111', 211') des Kolbengrundkörpers (11) mit dem Rohling (12', 112', 212') des Kolbenringelements (12) über ihre Fügeflächen (29, 129, 229, 31, 131, 231; 32, 132, 232, 33, 133, 233) mittels Reibschweißen zu einem Kolbenrohling (10', 110'), spezifiziert,
(e) Nachbearbeiten und/oder Fertigbearbeiten des Kolbenrohlings (10', 110') zu einem Kolben (10).
**dadurch gekennzeichnet, dass**
- in Schritt (d) der Rohling (11', 111', 211') des Kolbengrundkörpers (11) oder der Rohling (12', 112', 212') des Kolbenringelements (12) in Rotation versetzt wird, der Rohling (11', 111', 211') des Kolbengrundkörpers (11) und der Rohling (12', 112', 212') des Kolbenringelements (12) unter einem auf die Fügeflächen (29, 31; 32, 33) bezogenen anfänglichen Anpressdruck zusammengedrückt werden, die Rotation unter Beibehaltung des anfänglichen Anpressdrucks gestoppt wird und nach Stillstand der Rotation unmittelbar der Anpressdruck auf ein Mehrfaches des anfänglichen Anpressdrucks zur metallurgischen Verbindung des Kolbengrundkörpers (11) und des Rohlings des Kolbenringelements (12) erhöht wird,
- wobei die Rotation des Rohlings des Kolbengrundkörpers (11) oder des Rohlings des Kolbenringelements (12) bei einer Drehzahl von 1.500 U/min bis 2.500 U/min unter einem anfänglichen Anpressdruck von 10 N/mm² bis 30 N/mm² erfolgt und die Rotation nach 1 Sekunde bis 3 Sekunden unter Beibehaltung des anfänglichen Anpressdrucks beendet wird.

## Claims

1. Method for producing a piston (10) for an internal combustion engine with a main piston base body (11) and a piston ring element (12), wherein the main piston base body (11) has at least one piston shaft (15), wherein the piston ring element (12) has at least one piston head (19), a circumferential top land (21) and a circumferential ring part (22) provided with annular grooves, and wherein the main piston base body (11) and the piston ring element (12) form a circumferential closed cooling duct (23), **characterised by** the following method steps:
(a) providing a blank (11', 111', 211') of a main piston base body (11), in which an outer joining surface (29, 129, 229) and an inner joining surface (31, 131, 231) and a lower cooling duct part (23a) circulating between the two joining surfaces (29, 31; 129, 131; 229, 231) are premachined,
(b) providing a blank (12', 112', 212') of a piston ring element (12), in which an outer joining surface (32, 132, 232) and an inner joining surface (33, 133, 233) and an upper cooling duct part (23b) circulating between the two joining surfaces (32, 33; 132, 133; 232, 233) are premachined,
(c) forming a circumferential widening (34a, 34b; 134b; 234a, 234b) on at least one joining surface (29, 129, 229, 31, 131, 231; 32, 132, 232, 33, 133, 233), the widening (34a, 34b; 134b; 234a, 234b) extending to the associated cooling duct part (23a; 23b),
(d) connecting the blank (11', 111', 211') of the main piston base body (11) to the blank (12', 112', 212') of the piston ring element (12) by means of the joining surfaces (29, 129, 229, 31, 131, 231; 32, 132, 232, 33, 133, 233) thereof using friction welding to form a piston blank (10', 110'), specified,
(e) post-processing and/or finishing the piston blank (10', 110') to form a piston (10),
**characterised in that**
- in step (d) the blank (11', 111', 211') of the main piston base body (11) or the blank (12', 112', 212') of the piston ring element (12) is set into rotation, the blank (11', 111', 211') of the main piston base body (11) and the blank (12', 112', 212') of the piston ring element (12) are pressed together under an initial pressure relative to the joining surfaces (29, 31; 32, 33), the rotation is stopped while maintaining the initial pressure and after stopping the rotation the pressure is increased immediately to a multiple of the initial pressure for the metallurgical connection of the main piston base body (11) and the blank of the piston ring element (12),
- wherein the rotation of the blank of the main piston base body (11) or the blank of the piston ring element (12) has a speed of 1,500 rpm to 2,500 rpm under an initial pressure of 10 N/mm² to 30 N/mm² and the rotation is ended after 1 second to 3 seconds while maintaining the initial pressure.

## Revendications

1. Procédé de fabrication d'un piston (10) pour un moteur à combustion interne avec un corps de base de piston (11) et avec un segment de piston (12), dans lequel le corps de base de piston (11) présente au moins une tige de piston (15), dans lequel le segment de piston (12) présente au moins un fond de piston (19), un cordon de feu périphérique (21) et une partie annulaire périphérique (22) munie de rainures annulaires et dans lequel le corps de base de piston (11) et le segment de piston (12) forment un canal de refroidissement (23) périphérique fermé, **caractérisé par** les étapes de procédés suivantes :
(a) préparation d'une ébauche (11', 111', 211') d'un corps de base de piston (11), telle qu'une surface d'assemblage extérieure (29, 129, 229) et une surface d'assemblage intérieure (31, 131, 231) ainsi qu'une partie de canal de refroidissement (23a) inférieure, périphérique, entre deux surfaces d'assemblage (29, 31 ; 129, 131 ; 229, 231) sont pré-usinées,
(b) préparation d'une ébauche (12', 112', 212') d'un segment de piston (12), telle qu'une surface d'assemblage extérieure (32, 132, 232) et une surface d'assemblage intérieure (33, 133, 233) ainsi qu'une partie de canal de refroidissement (23b) supérieure, périphérique, entre deux surfaces d'assemblage (32, 33 ; 132, 133 ; 232, 233) sont pré-usinées,
(c) formage d'un élargissement périphérique (34a, 34b ; 134b ; 234a, 234b) au niveau d'au moins une surface d'assemblage (29, 129, 229, 31, 131, 231; 32, 132, 232, 33, 133, 233), dans laquelle l'élargissement (34a, 34b ; 134b ; 234a, 234b) s'étend vers la partie de canal de refroidissement (23a ; 23b) associée,
(d) assemblage de l'ébauche (11', 111', 211') du corps de base de piston (11) avec l'ébauche (12', 112', 212') du segment de piston (12) par l'intermédiaire de leurs surfaces d'assemblage (29, 129, 229, 31, 131, 231 ; 32, 132, 232, 33, 133, 233) au moyen d'un soudage par friction afin d'obtenir une ébauche de piston (10', 110'), spécifié,
(e) post-usinage et/ou finition de l'ébauche de piston (10', 110') afin d'obtenir un piston (10),
**caractérisé en ce que**
- à l'étape (d), l'ébauche (11', 111', 211') du corps de base de piston (11) ou l'ébauche (12', 112', 212') du segment de piston (12) sont mises en rotation, l'ébauche (11', 111', 211') du corps de base de piston (11) et l'ébauche (12', 112', 212') du segment de piston (12) sont pressées ensemble avec une pression de serrage initiale par rapport aux surfaces d'assemblage (29, 31 ; 32, 33), la rotation est arrêtée tout en conservant la pression de serrage initiale et, après arrêt de la rotation, la pression de serrage est directement augmentée à un multiple de la pression de serrage initiale en vue de l'assemblage métallurgique du corps de base de piston (11) et de l'ébauche du segment de piston (12),
- dans lequel la rotation de l'ébauche du corps de base de piston (11) ou de l'ébauche du segment de piston (12) s'effectue à une vitesse de 1500 tours/min à 2 500 tours/min avec une pression de serrage initiale de 10 N/mm² à 30 N/mm² et la rotation est arrêtée après 1 à 3 secondes en conservant la pression de serrage initiale.
